# EUROPÄISCHE PATENTANMELDUNG

(11) **EP 0 913 423 A2**
(43) Veröffentlichungstag der Anmeldung: **06.05.1999**
(21) Anmeldenummer: 98118981.4
(22) Anmeldetag: 07.10.1998
(51) Int. Cl.: C08J 9/224, C08J 9/228, C08L 25/04

(54) **Beschichtete expandierbare Polystyrolpartikel**

(30) Priorität: 28.10.1997 DE 19747541
(71) Anmelder: BASF AKTIENGESELLSCHAFT, 67056 Ludwigshafen (DE)
(72) Erfinder: Hahn, Klaus, Dr., 67281 Kirchheim (DE); Löffler, Achim, Dr., 76137 Karlsruhe (DE); Steinbrecher, Horst, 67354 Römerberg (DE); Naegele, Dieter, Dr., 67550 Worms (DE); Hohwiller, Frieder, 67098 Bad Dürkheim (DE)

(57) **Zusammenfassung**

Die Erfindung betrifft treibmittelhaltige, expandierbare Polystyrol-Partikel, die mit 0,01 bis 1,0 Gew.-% eines alkoxylierten Talgfettalkohols als Hydrophobierungsmittel beschichtet sind, welches oberhalb von 10°C schmilzt und eine mittlere Teilchengröße von weniger als 100 µm aufweist. Die Partikel sind zu Schaumstoff-Formkörpern mit verminderter Wasseraufnahmefähigkeit verarbeitbar.

## Beschreibung

Die Erfindung betrifft treibmittelhaltige, expandierbare Polystyrol (EPS) - Partikel, aus denen Formkörper mit verminderter wasseraufnahmefähigkeit bzw. verringerter Wasserdurchlässigkeit hergestellt werden können.

Bei vielen Einsatzgebieten von Polystyrolschaumstoffen, beispielsweise für Dachisolierungen, Perimeterdämmung oder Fischkisten, kommt es zu einer Einwirkung von Wasser auf die Schaumstoff-Formteile. Dabei besteht die Gefahr, daß Feuchtigkeit in das Innere des Schaumstoffs eindringt, was zu einer Verringerung der Isolierwirkung führt.

Bisher wurde die Wasseraufnahme von Platten und Formteile aus Polystyrolpartikelschaum zumeist durch Aufbringen einer Kunststoffolie oder Lackierung der fertigen Formteile verhindert bzw. verringert. Das erfordert jedoch einen zusätzlichen Verfahrensschritt, außerdem ist bei komplizierten Formen dieser Überzug nicht überall gleichmäßig.

Eine weitere Möglichkeit der Minimierung des Wassereintritts in Formteile aus Polystyrol-Partikelschaum besteht darin, das Volumen zwischen den EPS-Partikeln, die sogenannten Zwickel, möglichst gering zu halten. Das kann erreicht werden durch Erhöhung von Druck und Temperatur des zum Ausschäumen verwendeten Wasserdampfes. Nachteilig ist hierbei jedoch, daß dadurch die Herstellungszeit der Formteile erhöht wird, und daß bei Erhöhung der Temperatur ein erhöhter Energieverbrauch bei der Formteilherstellung resultiert.

Die PCT-Patentanmeldung PCT/DE 97/02 362 betrifft EPS-Partikel mit verminderter Wasseraufnahme, die mit einem Hydrophobierungsmittel beschichtet sind. Als geeignete Hydrophobierungsmittel sind Paraffinwachse, Umsetzungsprodukte aus einem N-Methylolamin und einem Fettsäurederivat, sowie Polyfluoralkyl(acrylate genannt.

Aufgabe der vorliegenden Erfindung war es, weitere Polystyrolpartikelschaumstoffe mit verminderter Wasseraufnahmefähigkeit bereitzustellen, die einfach und ohne zusätzliche Verfahrensschritte hergestellt werden können.

Diese Aufgabe wird gelöst durch treibmittelhaltige EPS-Partikel, die mit einem Hydrophobierungsmittel beschichtet sind. Gegenstand der Erfindung sind demzufolge treibmittelhaltige, expandierbare Polystyrol (EPS)-Partikel, die mit 0,01 bis 1,0 Gew.-% eines alkoxylierten Talgfett- oder Talgfettoxoalkohols als Hydrophobierungsmittel beschichtet sind. Ein weiterer Gegenstand der Erfindung sind entsprechend beschichtete expandierte Polystyrolpartikel.

Es ist üblich, EPS-Partikel mit Stearaten, z.B. Glycerinmonostearat oder Zinkstearat als Mittel zur Verkürzung der Kühlzeit zu beschichten. Diese Stearate wirken jedoch nicht als Hydrophobierungsmittel. Man hat auch schon flüssige Paraffinöle zur Verkürzung der Kühlzeit bei der Formherstellung auf EPS-Partikel aufgebracht, was aber zu verringerter Expandierfähigkeit führt.

EPS-Partikel werden nach an sich üblichen und bekannten Verfahren hergestellt. Dazu wird das monomere Styrol, gegebenenfalls im Gemisch mit anderen olefinisch ungesättigten Comonomeren, Initiatoren, Hilfs- und Zusatzstoffen in Wasser suspendiert und in Gegenwart von Suspensionsstabilisatoren polymerisiert. Die entstehenden Polystyrolperlen werden abgetrennt, gewaschen und getrocknet. Die Zugabe des Treibmittels kann dabei bereits während der Polymerisation erfolgen, es ist jedoch auch möglich, das Treibmittel in einem nachfolgenden Verfahrensschritt in die Polystyrolperlen einzubringen. Geeignete Treibmittel sind C₄-C₈-Kohlenwasserstoffe, vorzugsweise Pentan.

Die EPS-Partikel sind erfindungsgemäß mit 0,01 bis 1,0 vorzugsweise mit 0,1 bis 0,5 Gew.-%, jeweils bezogen auf Feststoff, des alkoxylierten Talgfettalkohols beschichtet, welcher vorzugsweise unterhalb von 10°C schmilzt.

Bevorzugt sind die Umsetzungsprodukte aus Talgfett- bzw. Talgfettoxoalkoholen mit 6 bis 40 Kohlenstoffatomen einerseits und 1 bis 100 Mol Ethylenoxid, Propylenoxid und Butylenoxid andererseits. Geeignete Handelsprodukte sind die LUTENSOL- und PLURAFAC-Typen der BASF AG. Geeignet sind auch Mischungen verschiedenartiger Talgfettalkohole, sowie Mischungen mit anderen Hydrophobierungsmitteln.

Das Hydrophobierungsmittel wird vorzugsweise auf die EPS-Partikel unmittelbar nach der Aufarbeitung und Trocknung aufgebracht und zwar zweckmäßigerweise zusammen mit anderen üblichen Beschichtungsmitteln, wie Antiverklebungsmitteln, z.B. Metallstearate und feinteilige Kieselsäure, sowie Mitteln zur Verkürzung der Entformzeit, wie Glycerinester und Hydroxycarbonsäureester. Bevorzugt wird das flüssige Hydrophobierungsmittel an porenhaltige Feststoffe, wie z.B. feinteilige Kieselsäure adsorbiert und damit die Beschichtung vorgenommen. Da durch die Beschichtung mit dem Hydrophobierungsmittel die Entflammbarkeit der Schaumstoffe heraufgesetzt werden kann, ist es in manchen Fällen zweckmäßig, zusammen mit dem Hydrophobierungsmittel auch noch Flammschutzmittel, z.B. Bromverbindungen wie Hexabromcyclododecan, in Mengen von 0,01 bis 0,5 Gew.-%, bezogen auf EPS, aufzubringen. Es ist grundsätzlich auch möglich, das Hydrophobierungsmittel auf vorgeschäumte EPS-Partikel aufzubringen. In beiden Fällen erfolgt der Auftrag durch Besprühen oder vorzugsweise durch Auftrommeln in einem üblichen Trommelmischer.

Schließlich kann man das Hydrophobierungsmittel auch bei der Herstellung der EPS-Partikel durch Polymerisation von Styrol in wäßriger Suspension zusetzen.

Nach der Behandlung der EPS-Partikel mit den Hydrophobierungsmitteln werden die Partikel getrocknet. Das geschieht üblicherweise mit Luft bei Raumtemperatur oder leicht erhöhter Temperatur, die jedoch bei der Behandlung von unverschäumten Partikeln soweit unterhalb ihrer Erweichungstemperatur liegen muß, daß ein unbeabsichtigtes Aufschäumen und ein Entweichen des Treibmittel verhindert wird. Die EPS-Partikel weisen im allgemeinen eine mittlere Partikelgröße von 0,1 bis 3 mm, insbesondere von 0,3 bis 2,0 mm auf.

Die Verschäumung der mit Treibmittel enthaltenden EPS-Partikel zu Schaumstoffen erfolgt üblicherweise ebenfalls nach den im Stand der Technik bekannten Verfahren, indem sie zunächst mit Wasserdampf in offenen oder geschlossenen Vorschäumern vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im allgemeinen eine mittlere Partikelgröße von 1 bis 10 mm, insbesondere von 2 bis 8 mm auf.

Weitere Angaben zu den üblichen Polymerisations-, Imprägnier-, und Schäumverfahren finden sich beispielsweise im Kunststoffhandbuch, Band 5, Polystyrol, herausgegeben von R. Vieweg und G. Daumiller, Carl-Hanser-Verlag München, 1969.

Überraschenderweise kommt es durch die erfindungsgemäße Behandlung mit den Hydrophobierungsmitteln zu keinerlei Nachteilen bei den mechanischen und den Verarbeitungseigenschaften der Styrolpolymerisate. Es treten auch keine Erhöhungen der Entformzeiten auf.

Hydrophobierungsmittel werden normalerweise angewandt um flächige Materialien, wie Textilien, Leder oder Papier wasserabstoßend zu machen. Es war nicht zu erwarten, daß sie auf expandierbare Partikel aufgebracht - nach deren Aufschäumen und Versintern zu einem Formteil dieses wasserundurchlässig machen können, und daß durch die Beschichtung die Verschweißung der expandierten Partikel nicht behindert wird.

Die erfindungsgemäßen expandierten Polystyrolpartikel können mit Vorteil zur Herstellung von solchen Formteilen eingesetzt werden, die ständiger Wassereinwirkung ausgesetzt sind, z.B. für Platten für die Dachisolierung oder Perimeterdämmung, für Schwimmkörper oder wasserempfindliche Verpackungsmaterialien, wie Fischkisten.

Die in den Beispielen genannten Prozente beziehen sich auf das Gewicht.

Die Wasseraufnahme wurde nach DIN 53 433 gemessen, die Wasserdurchlässigkeit nach folgender Methode: Auf eine Schaumstoffplatte einer Dicke von 100 mm wurde ein Rohr von 100 mm Durchmesser geklebt und mit einer Wassersäule von 100 mm Höhe gefüllt.

Nach 24 Stunden wurde geprüft, ob auf der Unterseite der Schaumstoffplatte ein Wasseraustritt zu beobachten ist. Das Absenken des Wasserspiegels wurde in mm Wassersäule gemessen. Vor den Versuche wurden die Schaumstoffplatten 24 Stunden im Trockenschrank bei 60°C konditioniert. Danach wurden die Rohre mittels Silikonkautschuk aufgeklebt.

### Beispiel 1

In einem Schaufelmischer mit einem Volumen 40 l wurden 25 kg EPS (Perlgröße 0,4-0,7 mm, Pentangehalt 6,1 %) mit den in der Tabelle 1 aufgegebenen Beschichtungsmitteln 10 min bei 25°C intensiv gemischt.

Anschließend wurden die beschichteten Perlen in einem drucklosen Schäumkasten (System Rauscher) vorgeschäumt und nach 12 Stunden zu plattenförmigen Formteilen (Raumgewicht 20 kg/m³) verarbeitet.

Tabelle 1 zeigt die Zusammensetzung der Beschichtungen und die gemessenen Eigenschaften der Platten. Der Versuch 1 ist nicht erfindungsgemäß.

**Tabelle 1**

| Versuch | Beschichtung % bezogen auf EPS | Wasseraufnahme % | Wasserdichtigkeit mm |
|---|---|---|---|
| 1 | 0,25 GTS | 5,8 | 28 |
| | 0,12 Aerosil R 972 | | |
| | 0,13 Zn-Stearat | | |
| 2 | 0,25 GTS | 0,9 | 9 |
| | 0,12 Aerosil R 972 | | |
| | 0,13 Zn-Stearat | | |
| | 0,20 PLURAFAC LF 120 | | |

- GTS =: technisches Glycerintristearat
- Aerosil R 972 =: feinteilige Kieselsäure (Fa. DEGUSSA)
- PLURAFAC LF 120 =: Umsetzungsprodukt von 7,8 Mol Ethylenoxid und 1,2 Mol Butylenoxid mit 1 Mol eines C₉-C₁₁-Oxoalkohols.

## Patentansprüche

1. Treibmittelhaltige, expandierbare Polystyrol (EPS)-Partikel, die mit 0,01 bis 1,0 Gew.-% eines Hydrophobierungsmittels beschichtet sind, dadurch gekennzeichnet, daß das Hydrophobierungsmittel ein alkoxylierter Talgfett- oder Talgfettoxoalkohol ist.

2. Verfahren zur Herstellung der expandierbaren Polystyrolpartikel nach Anspruch 1, dadurch gekennzeichnet, daß das Hydrophobierungsmittel an feinteiliger Kieselsäure adsorbiert wird, und die EPS-Partikel damit beschichtet werden.

3. Verfahren nach Anspruch 2, dadurch gekennzeichnet, daß zusätzlich zu dem Hydrophobierungsmittel noch Flammschutzmittel und/oder Antiverklebungsmittel und/oder Mittel zur Verkürzung der Entformzeit auf die EPS-Partikel aufgebracht werden.

4. Verfahren nach Anspruch 2, dadurch gekennzeichnet, daß die Behandlung durch Besprühen oder Auftrommeln vorgenommen wird.

5. Verfahren zur Herstellung der expandierbaren Polystyrolpartikel nach Anspruch 1, dadurch gekennzeichnet, daß das Hydrophobierungsmittel bei der Herstellung der EPS-Partikel durch Polymerisation von Styrol in wäßriger Suspension zugesetzt wird.

6. Expandierte Polystyrolpartikel, dadurch gekennzeichnet, daß sie mit 0,01 bis 1,0 Gew.-% des Hydrophobierungsmittels nach Anspruch 1 beschichtet sind.

7. Verfahren zur Herstellung von expandierten Polystyrolpartikeln, dadurch gekennzeichnet, daß man beschichtete EPS-Partikel nach Anspruch 1 verschäumt.

8. Verfahren zur Herstellung von expandierten Polystyrolpartikeln, dadurch gekennzeichnet, daß man expandierte Polystyrolpartikel mit 0,01 bis 1,0 Gew.-% des Hydrophobierungsmittels nach Anspruch 1 beschichtet.

9. Verwendung der expandierten Polystyrolpartikel nach Anspruch 6 zur Herstellung von Dachisolierungen, Perimeterdämmplatten, Schwimmkörpern oder wasserempfindlichen Verpackungsmaterialien.
